(19) Europäisches Patentamt
European Patent Office
Office européen des brevets

(11) EP 1 298 134 B1

(12) EUROPÄISCHE PATENTSCHRIFT

(45) Veröffentlichungstag und Bekanntmachung des Hinweises auf die Patenterteilung:
**17.09.2003 Patentblatt 2003/38**

(51) Int Cl.7: **C07F 7/08**, C07F 7/12

(21) Anmeldenummer: **02021272.6**

(22) Anmeldetag: **19.09.2002**

(54) **Norbornylsubstituierte Silane und deren Verwendung zum Schützen funktioneller Gruppen organischer Verbindungen**

Norbornyl-substituted silanes and their use in the protection of functional groups of organic compounds

Norbornylsilanes et leur utilsation comme groupements protecteurs en chimie organique

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **27.09.2001 DE 10147625**

(43) Veröffentlichungstag der Anmeldung:
**02.04.2003 Patentblatt 2003/14**

(73) Patentinhaber: **Consortium für elektrochemische Industrie GmbH**
**81379 München (DE)**

(72) Erfinder:
- **Heldmann, Dieter, Dr.**
  **81379 München (DE)**
- **Schäfer, Oliver, Dr.**
  **81377 München (DE)**
- **Stohrer, Jürgen, Dr.**
  **82049 Pullach (DE)**

(74) Vertreter: **Deffner-Lehner, Maria, Dr. et al**
**Wacker-Chemie GmbH,**
**Zentralabteilung PLM,**
**Hanns-Seidel-Platz 4**
**81737 München (DE)**

(56) Entgegenhaltungen:
**DE-C- 10 147 625** **DE-C- 19 919 152**

- **LALONDE M ET AL: "Use of organosilicon reagents as protective groups in organic synthesis" SYNTHESIS, September 1985 (1985-09), Seiten 817-845, XP002225986 ISSN: 0039-7881**
- **COREY E J ET AL: "PROTECTION OF HYDROXYL GROUPS AS TERT-BUTYLDIMETHYLSILYL DERIVATIVES" JOURNAL OF THE AMERICAN CHEMICAL SOCIETY, AMERICAN CHEMICAL SOCIETY, WASHINGTON, DC, US, Bd. 94, Nr. 17, 23. August 1972 (1972-08-23), Seiten 6190-6191, XP002225987 ISSN: 0002-7863**
- **EDDY V J ET AL: "Effects of proximate polar groups on the rates of hydrosilylation" JOURNAL OF ORGANIC CHEMISTRY, Bd. 52, Nr. 10, 15. Mai 1987 (1987-05-15), Seiten 1903-1906, XP002225988 ISSN: 0022-3263**

EP 1 298 134 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft Norbornylsubstituierte Silane und deren Verwendung.

Typische Schutzgruppensilane wie TBM2-Silan (tert.-Butyldimethylchlorsilan) oder IPM2-Silan (Isopropyldimethylchlorsilan) werden durch Addition von Grignardreagenzien an die entsprechenden Chlorsilane hergestellt, nachfolgend erfolgt ein Austausch des verbliebenen Wasserstoffes mit HCl unter Verwendung eines geeigneten Katalysators (z. B. DE-C 199 19 152).

$$^{t}BuMgCl + HMe_2SiCl \longrightarrow HMe_2Si^{t}Bu \xrightarrow[(Kat.)]{HCl} {}^{t}BuMe_2SiCl$$

Gängig ist auch die Verwendung von Organolithiumreagenzien (E. J. Corey, A. Venkateswarlu, J. Am. Chem. Soc. **1972**, *94*, 6190-6191). Aufgrund der Bedeutung als Schutzgruppen in der organischen Synthese (siehe z. B. M. Lalonde, T.H. Chan, Synthesis 1985, 817-845) ist eine breite Palette kommerziell erhältlich. Die typischen gängigen Schutzgruppensilane (TBM2, IPM2) mit sterisch anspruchsvollen, sekundären und tertiären Alkylresten benötigen zur Herstellung aber teure metallorganische Reagenzien.

Aufgrund der Regioselektivität der Hydrosilylierung sind solche Verbindungen nicht direkt aus den entsprechenden Alkenen (z.B. 2-Methyl-prop-1-en für TBM2, Propen für IPM2) und Dimethylchlorsilan zu erhalten. Die Addition erfolgt bevorzugt an das sterisch weniger anspruchsvolle Kohlenstoffatom der Doppelbindung, führt also bei Propen zu 1-Propyldimethylchlorsilan (Szabo, K. et al. Helv. Chim. Acta 1984, 67, 2128-2142) und nicht zu 2-Propyl-dimethylchlorsilan.

Die Hydrosilylierung von Dimethylchlorsilan mit Norbornen unter Pt-Katalyse führt bevorzugt zu exo-2-(Dimethylchlorsilyl)-bicyclo[2.2.1]heptan (Eddy, V. J.; Hallgren, J. E. J. Org. Chem. 1987, 52(10), 1903-1906; Green, M.; Spencer, J. L.; Stone, F. G. A.; Tsipis, C. A., J. Chem. Soc. Dalton Trans. 1977, 1519-1525.). Diese Verbindung kann auch mit Norbornyldimethylchlorsilan (NM2-Silan) bezeichnet werden. Da es sich bei Norbornen um ein disubstituiertes Alken handelt, sind so sekundäre Alkylreste am Silicium zugänglich. Aufgrund der Winkelspannung von Norbornen verläuft die Reaktion im Vergleich zu anderen internen Alkenen wie Cyclopenten wesentlich leichter ab. Die Hydrosilylierung substituierter Norbornenderivate mit Dimethylchlorsilan ist ebenfalls bekannt (Magomedov, G. K.-I. et al, J. Gen. Chem. USSR (Engl. Transl.) 1988, 58(1), 91-93).

Dichlorsilane, die zwei sperrige Reste wie Isopropyl- oder tert.-Butyl- tragen, finden ebenfalls als Schutzgruppen, insbesondere für Diole, Verwendung (siehe z. B. M. Lalonde, T.H. Chan, Synthesis 1985, 817-845). Zur Herstellung dieser Verbindungen werden wiederum metallorganische Reagenzien wie Grignardverbindungen analog dem obigen Schema eingesetzt.

Mononorbornylsubstituierte Dichlorsilane sind ebenfalls bekannt. So wurde die Pt-katalysierte Hydrosilylierung von Dichlormethylsilan mit Norbornen beschrieben, die das gewünschte Dichlornorbornylmethylsilan in 85% Ausbeute liefert (Green, M.; Spencer, J. L.; Stone, F. G. A.; Tsipis, C. A., J. Chem. Soc. Dalton Trans. 1977, 1519-1525).

Es bestand die Aufgabe Silane bereitzustellen, die als Schutzgruppenreagenzien zum Schützen von funktionellen Gruppen organischer Verbindungen, wobei die organischen Verbindungen mindestens eine funktionelle Gruppe mit acidem Wasserstoff enthalten, geeignet sind und die in einem einfachen Verfahren aus leicht zugänglichen Edukten kostengünstig herstellt werden können. Die Aufgabe wird durch die Erfindung gelöst.

Gegenstand der Erfindung ist die Verwendung von Silanen (1) der allgemeinen Formel

$$R^1_aR_{4-a-x}SiA_x \qquad (I)$$

wobei R gleich oder verschiedenen ist und einen einwertigen, von aliphatischen Kohlenstoff-Kohlenstoff-Mehrfachbindungen freien, gegebenenfalls substituierten Kohlenwasserstoffrest mit 1 bis 18 Kohlenstoffatom(en) je Rest bedeutet,

$R^1$ einen gegebenenfalls substituierten 2-Norbornylrest bedeutet,
A ein Chloratom oder ein Rest der Formel $-OSO_2CF_3$ ist,
a 1, 2 oder 3 und
x 1 oder 2 ist,
mit der Maßgabe, dass die Summe $a+x \leq 4$ ist,

zum Schützen von funktionellen Gruppen organischer Verbindungen (2), wobei die organischen Verbindungen mindestens eine funktionelle Gruppe mit acidem Wasserstoff ausgewählt aus der Gruppe der

Hydroxylgruppen -OH,
Thiolgruppen -SH,
Amingruppen -NH- und $-NH_2$
Carboxylgruppen -COOH und
Amidgruppen -CONH- und $-CONH_2$
und mindestens 2 Kohlenstoffatome enthalten.

Beispiele für Reste R sind Alkylreste, wie der Methyl-, Ethyl-, n-Propyl-, iso-Propyl-, n-Butyl-, iso-Butyl-, tert. -Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptylund Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der $\alpha$- und der $\beta$-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest

Bevorzugt ist R ein Alkylrest mit 1 bis 4 Kohlenstoffatomen und der Phenylrest, besonders bevorzugt ist der Methyl- und Phenylrest.

Die erfindungsgemäßen Silane (1) werden als Schutzgruppenreagenzien in der organischen Synthese verwendet. Die Schutzgruppe ist der Silylrest.

Der Begriff einer Schutzgruppe ist dem Fachmann in der organischen Chemie bekannt (z.B. M. Lalonde, T. H. Chan, Synthesis 1985, 817-845). Unter der Verwendung als Schutzgruppe ist demzufolge zu verstehen, dass eine komplexe organische Verbindung mit mindestens zwei C-Atomen, die eine funktionelle Gruppe mit acidem Wasserstoff trägt, wie Hydroxyl-, Thiol-, Amin-, Amid- oder Carboxylgruppe, mit norbornylhaltigem Silan unter Freisetzung von HCl bzw $HOSO_2CF_3$ einen Silylether, -thioether, -amin, -amid, oder -ester bildet. Die in dieser Art geschützte Verbindung wird nun einer oder mehrerer chemischen Reaktionen unterworfen, die chemische oder biochemische Transformationen am Molekülgerüst vornehmen aber die Silylschutzgruppe unberührt lassen. Diese Transformationen wären bei Vorhandensein des aciden Wasserstoffes nicht anwendbar gewesen. Nach Durchführung dieser Reaktion(en) wird die Silylschutzgruppe wieder abgespalten.

Beispiele für Reste $R^1$ sind solche der Formel

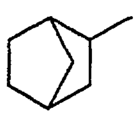 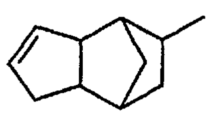 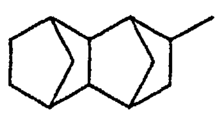 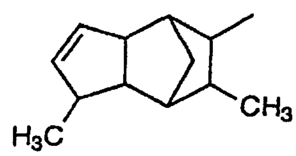

Bevorzugt ist als Rest $R^1$ der 2-Norbornylrest.

Der Rest A ist die Abgangsgruppe, die entweder ein Chlorid $Cl^-$ oder ein Trifluormethansulfonat $F_3CSC_2O^-$ sein kann. Trifluormethansulfonate sind insbesondere zur Silylierung sterisch anspruchsvoller organischer Verbindungen (2) geeignet.

Beispiele für die erfindungsgemäßen Silane sind

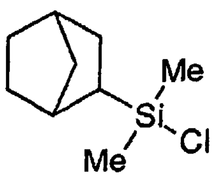

**1**

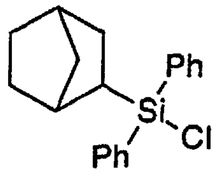

**2**

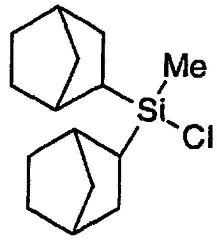

**3**

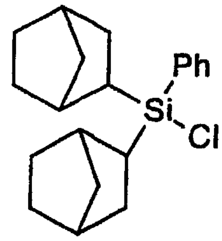

**4**

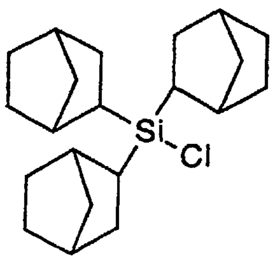

**5**

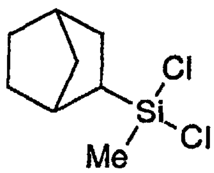

**6**

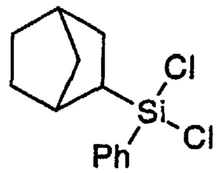

**7**

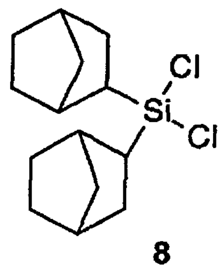

**8**

sowie die analogen Verbindungen wo Chlorid (-C1) durch Trifluormethansulfonat ($-OSO_2CF_3$) ersetzt ist, wie 2-Norbornyldimethylsilyltrifluormethansulfonat und Di(2-norbornyl)silyldi(trifluormethansulfonat).

Di(2-norbornyl)methylchlorsilan **3** wird durch Hydrosilylierung von Methylchlorsilan ($H_3CSiH_2Cl$) mit Norbornen hergestellt.
Tri(2-norbornyl)chlorsilan **5** wird durch Hydrosilylierung von Chlorsilan ($H_3SiCl$) mit Norbornen hergestellt.
Di(2-norbornyl)dichlorsilan **8** wird durch Hydrosilylierung von Dichlorsilan ($H_2SiCl_2$) mit Norbornen hergestellt.
Die Herstellung der Trifluormethansulfonate erfolgt durch Kochen der entsprechenden Chloride mit Trifluormethansulfonsäure.

Die monofunktionellen Verbindungen **1** bis **5** sind zur Schützung von organischen Verbindungen geeignet, wobei jede funktionelle Gruppe mit einer Silylschutzgruppe versehen wird.
Die difunktionellen Verbindungen **6** bis **8** sind insbesondere zur Schützung von organischen Verbindungen geeignet, die mehrere funktionelle Gruppen in Nachbarschaft tragen. Als Beispiele sind hier insbesondere 1,2-Diole, 1,3-Diole oder 1,4-Diole zu nennen. Ebenso können mit einem Molekül der Verbindungen **6** bis **8** aber auch jeweils eine funktionelle Gruppe von zwei organischen Verbindungen geschützt werden.

Die erfindungsgemäßen Silane (1) werden vorzugsweise als Schutzgruppen für Alkohole, Carbonsäuren und Amide verwendet.

Bevorzugte funktionelle Gruppen, die mit den erfindungsgemäßen Silanen geschützt werden, sind
Hydroxylgruppen -OH,
Carboxylgruppen -COOH oder
Amidgruppen -CONH-
wobei die Hydroxylgruppen bevorzugt sind. Die Hydroxylgruppen können von primären, sekundären oder tertiären Alkoholen sein.

Unter den organischen Verbindungen (2), deren funktionelle Gruppen mit den erfindungsgemäßen Silanen geschützt werden, sind typischerweise komplexe organische Verbindungen zu verstehen, die Vorprodukte für pharmazeutische Wirkstoffe sind. Dabei kann es sich auch um Naturstoffe oder Naturstoffanaloga handeln. Prinzipiell sind darunter alle organischen Moleküle zu verstehen, die eine der aufgeführten funktionellen Gruppen tragen. Unter organischen Verbindungen (2) sind vorzugsweise Verbindungen mit 2 bis 400 C-Atomen, bevorzugt 3 bis 100 C-Atomen, besonders bevorzugt 4 bis 50 C-Atomen, beliebiger Konstitution und Konfiguration zu verstehen, die beliebig substituiert sein können und deren Kohlenstoffgerüst durch Heteroatome unterbrochen sein kann.

Bei dem erfindungsgemäßen Verfahren werden die organischen Verbindungen (2) mit den erfindungsgemäßen Silanen (1) umgesetzt. Beispielhaft wird das an Hydroxylgruppen enthaltenden organischen Verbindungen dargestellt. Die organische Verbindung (2) kann eine funktionelle Gruppe, wie eine Hydroxylgruppe Z-OH oder zwei funktionelle Gruppen, wie zwei Hydroxylgruppen, in Nachbarschaft $Z(-OH)_2$, wie 1,2-Diole, 1,3-Diole oder 1,4-Diole, aufweisen:
Silane (1) der allgemeinen Formel

$$R^1_aR_{4-a-x}SiA_x \quad (I)$$

wobei R, $R^1$, A, a und x die oben dafür angegebene Bedeutung haben, werden mit organischen Verbindungen (2) der allgemeinen Formeln

Z-OH (IIa) oder 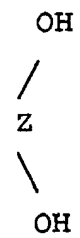 (IIb)

wobei Z ein Kohlenwasserstoffrest mit 2 bis 400 Kohlenstoffatomen, bevorzugt 3 bis 100 Kohlenstoffatomen, besonders bevorzugt 4 bis 50 Kohlenstoffatomen, der durch ein oder mehrere Heteroatome unterbrochen oder substituiert sein kann,
umgesetzt.
Dabei wird Säure HA freigesetzt.

Für die organische Verbindung mit einer funktionellen Gruppe (IIa) werden vorzugsweise Silane mit x=1 (und a=1, 2 oder 3), d.h. monofunktionelle Silane, eingesetzt.
Es werden dabei silylierte Verbindungen der allgemeinen Formel

$$R^1_aR_{3-a}Si\text{-}O\text{-}Z \quad (IIIa)$$

erhalten.

Für die organische Verbindung mit zwei funktionellen Gruppen in Nachbarschaft (IIb) werden vorzugsweise Silane mit x=2 (und a=1 oder 2), d.h. difunktionelle Silane, eingesetzt.
Es werden dabei silylierte Verbindungen der allgemeinen Formel

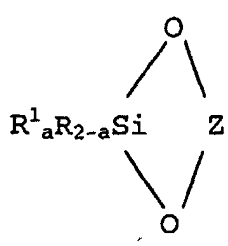 (IIIb)

erhalten.

Mit difunktionellen Silanen können aber auch je eine funktionelle Gruppe, wie Hydroxylgruppe, von zwei organischen Verbindungen (IIa) geschützt werden. Es werden dabei silylierte Verbindungen der allgemeinen Formel

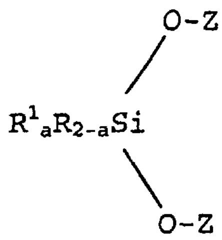

(IIIc)

erhalten.

Der Rest Z der organischen Verbindung (2) kann ein beliebiges Kohlenwasserstoffgerüst sein, das beliebig substituiert oder durch Heteroatome unterbrochen sein kann. Beispiele für Heteroatome sind O, N, S und P.

Beispiele für Reste Z können die für Reste R angegebenen Beispiele sein.

Einfache Modellverbindungen wurden als Beispiele für das erfindungsgemäße Verfahren zum Schützen von funktionellen Gruppen mit aciden H-Atomen gewählt.

Beispiele für solche silylierten Verbindungen, die jedoch nicht als Einschränkung des Restes Z zu verstehen sind und die mit Silanen (1) mit x=1, d.h. monofunktionellen Silanen, erhalten werden, sind:

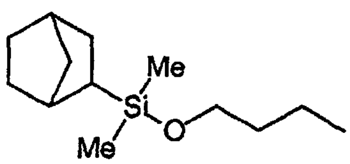
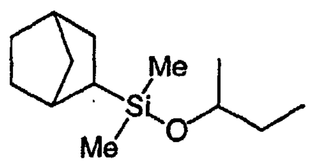
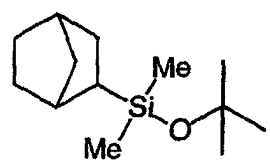

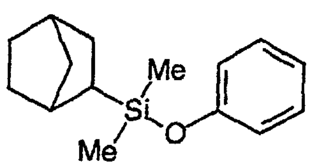
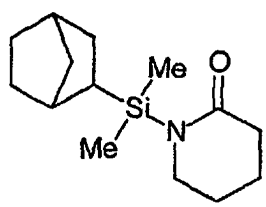
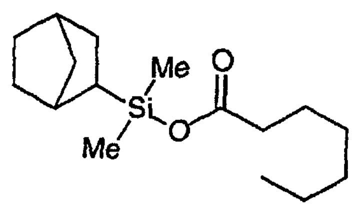

Me=Methylrest

Es sind exemplarisch jeweils ein Beispiel für einen geschützten primären, sekundären, tertiären und aromatischen Alkohol, sowie ein silyliertes Amid und ein Silylester einer Carbonsäure gezeigt.

Wesentliche Voraussetzung für die Eignung als Schutzgruppe ist, dass die Schutzgruppe beständig gegen eine Vielzahl von Reagenzien ist, die mit der geschützten funktionellen Gruppe interferieren würden. Hierzu wurden exemplarisch mit (2-Butoxy)-dimethyl-(2-norbornyl)silan Stabilitätstests im Vergleich zu den literaturbekannten analogen Verbindungen (2-Butoxy)-dimethyl-(tert.-butyl) silan und (2-Butoxy)-dimethyl-(2-propyl)silan durchgeführt, die in Beispielen zusammengefasst sind. Die Verbindung zeigt ein sehr gutes Eigenschaftsprofil, das zwischen den Silanen IPM2 und TBM2 liegt. Es handelt sich dabei nicht nur um eine Ergänzung, in vielen Fällen wird damit auch TBM2 zu ersetzen sein. Da Schutzgruppen keinen Beitrag zum Endmolekülgerüst beitragen, ist damit eine substanzielle Kostenersparnis verbunden.

Weitere Voraussetzung für eine Schutzgruppe ist die problemlose Entfernbarkeit nach der durchgeführten Reaktion durch geeignete Reagenzien. Auch dies wurde untersucht und ist in den Beispielen dokumentiert.

Beispiel 1: Herstellung von 2-Norbornyldimethylchlorsilan

Norbornen (141 g, 1.50 mol) wurde in Toluol (100 ml) gelöst und auf 80°C aufgeheizt. Nach der Zugabe von Platinkatalysator ([COD]$PtCl_2$, 70 mg) wurde Dimethylchlorsilan (169 g, 1,8 mol) innerhalb von 60 min langsam zugetropft, dabei steigt die Temperatur bis auf 98°C. Anschließend wurde noch 1h auf 80°C erhitzt. Überschüssiges Silan, unumgesetztes Norbornen und das Lösungsmittel wurden bei Normaldruck abdestilliert. Der Rückstand wurde im Membranpumpenvakuum fraktionierend destilliert. Man erhält 255 g (93 %) einer farblosen Flüssigkeit mit Sdp. 120°C/10 mbar. Reinheit 99,7 % (GC, GC=Gaschromatographie). $^1$H-NMR ($CDCl_3$): 0.15 (s, 3 H), 0.25 (s, 3 H); 0.6 (t, 1 H); 0.9 - 1.1 (m, 4 H), 1.2 - 1.4 (m, 4 H), 2.1 (2 s, überlagert, 2 H). Das exo/endo-Verhältnis beträgt 93:7 (GC). Die Angaben zur Analytik beziehen sich stets auf das Hauptisomer.

Beispiel 2: Herstellung von Di(2-norbornyl)dichlorsilan

Dichlorsilan (18.5 g, 0.18 mol) wurde bei -78°C in eine Kühlfalle einkondensiert und in vorgekühltem Xylol (200 ml) gelöst (Temperatur -10°C nach Zusammengeben). Anschließend wurde zuerst Norbornen (34.5 g, 0.37 mol) und dann der Katalysator [COD]$PtCl_2$ (1% Lösung in $CH_2Cl_2$, 2.50 ml) zugesetzt, worauf eine exotherme Reaktion spontan einsetzte. Die Temperatur stieg auf 46°C, wobei ab 40°C mit Eisbad gegengekühlt wurde. Nach 15 min begann die Temperatur wieder zu sinken. Gemäß GC (Gaschromatographie) waren ca. 50% des Norbornens verbraucht. Die Reaktionsmischung wurde für 15 min auf 80°C erhitzt, dann noch 1,5 h bei 40°C gehalten. Der Umsatz des eingesetzten Norbornens betrug gemäß GC > 90 %. Die Reaktionsmischung wurde fraktionierend destilliert. Der Hauptlauf bei Sdp. 118°C/1 mbar bestand aus 49,8 g Dichlordinorbornylsilan. Ausbeute 94 %. Reinheit 95,7 % (GC). $^1$H-NMR ($CDCl_3$): 1.0 (t, 2 H), 1.1 - 1.25 (m, 6 H), 1.35 - 1.45 (m, 4 H), 1.45 - 1.55 (m, 4 H), 1.55 - 1.65 (m, 2 H), 2.25 (s, 2 H), 2.35 (s, 2 H).

Beispiel 3: Allgemeine Vorschrift zur Herstellung von 2-Norbornyldimethylsilylethern

Der zu silylierende Alkohol (50 mmol), der in Tabelle 1 angegeben ist, und Imidazol (110 mmol) wurden in wasserfreiem DMF (50 ml) gelöst. Dimethylnorbornylchlorsilan (55 mmol), dessen Herstellung in Beispiel 1 beschreiben ist, wurde zugetropft (exotherm bei primären und sekundären Alkoholen, Anheizen auf 80°C bei tertiären Alkoholen notwendig). Nach vollständiger Umsetzung (GC-Kontrolle) wurde auf Wasser (50 ml) gegossen und die Reaktionsmischung mit Pentan (3 x 150 ml) extrahiert. Die vereinigten organischen Phasen wurden mit Wasser, gesättigter NaCl-Lösung (je 100 ml) gewaschen, über $Na_2SO_4$ getrocknet und einrotiert. Die Rohausbeuten sind nahezu quantitativ. Der Rückstand wurde im Vakuum fraktionierend destilliert um eine möglichst hohe Reinheit (> 95%) zu erreichen. Die Ergebnisse sind in Tabelle 1 zusammengefasst.

Tabelle 1:

| Alkohol | Produkt | Sdp.[°C] (1 mbar) | Reinheit (GC, Area%) | $^1$H-NMR ($CDCl_3$) |
|---|---|---|---|---|
| 1-Butanol | 1-Butoxydimethylnorbornylsilan | 63-64 | 96,0 | 0.0, 0.1 (2 s, 6 H), 0.6 (t, 1 H), 0.9 (t, 3 H), 1.1-1.5 (m, 12 H), 2.2 (s, 2 H), 3.6 (t, 2 H) |
| 2-Butanol | 2-Butoxydimethylnorbornylsilan | 68 | 98,5 | 0.05 (2 s, 6 H), 0.1 (d, 1 H), 0.6 (t, 1 H), 0.85 (t, 3 H), 1.1 (d, 4 H), 1.15-1.25 (m, 4 H), 1.3-1.45 (m, 4 H), 1.5 (d, 2 H), 2.2 (s, 2 H), 3.65 (q, 1 H) |
| Tert.-Butanol | Tert.butoxydimethylnorbornylsilan | 88-90 (10 mbar) | - | 0.1, 0.15 (2 s, 6 H), 0.4 - 0.55 (m, 1 H), 0.95-1.6 (m, 8 H), 1.2 (s, 9 H), 2.2 (2 s, 2 H) |

Tabelle 1: (fortgesetzt)

| Alkohol | Produkt | Sdp.[°C] (1 mbar) | Reinheit (GC, Area%) | $^1$H-NMR ($CDCl_3$) |
|---|---|---|---|---|
| Cyclohexanol | Cyclohexoxydimethylnorbornylsilan | 85-87 | 98,0 | 0.15-0.2 (m, 6 H), 0.6 (t, 1 H), 1.1-1.5 (m, 14 H) 1.6-1.8 (t, 4 H), 2.2 (s, 2 H), 3.5-3.6 (m, 1 H) |
| Phenol | Phenoxydimethylnorbornylsilan | 100 | 98,0 | 0.1 (2 s, 6 H), 0.7 (t, 1 H), 1.1-1.3 (m, 5 H), 1.3-1.5 (m, 3 H), 2.2 (d, 2 H), 6.7-7.1 (m, 5 H) |

Beispiel 4: Herstellung von 2-Norbornyldimethylsilyltrifluormethansulfonat

Bei Raumtemperatur wird Trifluormethansulfonsäure (7.50 g, 49.0 mmol) zu 2-Norbornyldimethylchlorsilan (9.50 g, 49.3 mmol), dessen Herstellung in Beispiel 1 beschrieben ist, getropft. Die Reaktionsmischung wurde für 10 h auf 60°C erhitzt. Das Rohprodukt wurde im Ölpumpenvakuum destilliert. 12.3 g (83 %) farblose, feuchtigkeitsempfindliche Flüssigkeit mit Sdp. 100-105°C (1 mbar). Reinheit 93 % (GC). $^1$H-NMR ($CDCl_3$) : 0.4 (2 s, 6 H), 0.9 (t, 1 H), 1.1-1.4 (m, 4 H), 1.5 (d, 2 H), 1:6 (d, 2 H), 2.3 (s, 2 H).

Beispiel 5: Herstellung von Di(2-norbornyl)silyldi(trifluormethansulfonat)

Die Arbeitsweise von Beispiel 4 wird wiederholt mit der Abänderung, dass anstelle von 2-Norbornyldimethylchlorsilan Di(2-Norbornyl)dichlorsilan, dessen Herstellung in Beispiel 2 beschrieben ist, eingesetzt wird.

Beispiel 6: Herstellung von silyliertem tert.-Butanol mit 2-Norbornyldimethylsilyltrifluormethansulfonat

2-Norbornyldimethylsilyltrifluormethansulfonat (4,54 g, 15 mmol), dessen Herstellung in Beispiel 4 beschrieben ist, wurde bei Raumtemperatur zu einer Lösung von tert.-Butanol (0.74 g, 10.0 mmol) und 2,6-Lutidin (2.24 g, 19,6 mmol) gegeben. Die Reaktion springt bei Raumtemperatur sofort exotherm an. Nach 2h wurde mit 1M HCl, $H_2O$ dest., gesättigter NaCl-Lösung ( je 10 ml) gewaschen, das Lösungsmittel am Rotationsverdampfer abgezogen und der Rückstand im Vakuum destilliert. Das Produkt ist identisch mit dem in Beispiel 3 beschriebenen.

Beispiel 7: Herstellung von silylierter Heptansäure

Heptansäure (6.51 g, 49.5 mmol) und Dimethylnorbornylchlorsilan (9.82 g, 51.0 mmol), dessen Herstellung in Beispiel 1 beschrieben wurde, wurden in $CH_2Cl_2$ (10 ml, trocken) gelöst. Unter Rühren wurde Imidazol (6.94 g, 101 mmol) dazugegeben, eine exotherme Reaktion setzte ein. Die Mischung wurde noch über Nacht bei RT gerührt, dann auf 100 ml $H_2O$ gegossen und mit Pentan (3 x 100 ml) extrahiert. Die vereinigten organischen Phasen wurden mit gesättigter $NaHCO_3$-Lösung (100 ml) gewaschen, über $Na_2SO_4$ getrocknet, das Lösungsmittel abrotiert und der Rückstand (12.7 g) im Vakuum destilliert. Ausbeute 6.0 g (42 %) farblose Flüssigkeit, Reinheit 96% (GC), $^1$H-NMR ($CDCl_3$): 0.1 (2 s, 6 H), 0.7-0.9 (m, 4H), 1.0-1.6 (m, 16 H), 2.2 (m, 4 H).

Beispiel 8: Herstellung von silyliertem 2-Pyrrolidon

2-Pyrrolidon (4.26 g, 49.6 mmol), Dimethylnorbornylchlorsilan (9.44 g, 49.0 mmol), dessen Herstellung in Beispiel 1 beschrieben wurde, und 4-Dimethylaminopyridin (0.62 g, 5.00 mmol) werden in abs. $CH_2Cl_2$ (20 ml) gelöst. $NEt_3$ (=Triethylamin) (5.06 g, 49.5 mmol) wird vorsichtig zugetropft (exotherme Reaktion). Der Ansatz wird mit weiterem $CH_2Cl_2$ (10 ml) verdünnt und über Nacht gerührt. Die Mischung wird auf $H_2O$ (100 ml) gegossen, und mit Pentan (3 x 100 ml) extrahiert. Die vereinigten organischen Phasen werden mit gesättigter $NaHCO_3$-Lösung (100 ml) gewaschen, über $Na_2SO_4$ getrocknet, einrotiert. Man erhält das silylierte Amid als farbloses Öl (9,8 g, 83%). $^1$H-NMR ($CDCl_3$): 0.2 (2 s, 6 H), 1.0 (t, 1 H), 1.1 (s, 2 H), 1.15 (t, 2 H), 1.2 (t, 2 H), 1.4 (dd, 4 H), 2.0-2.1 (m, 2 H), 22.2-2.4 (m, 4 H), 3.4 (t, 2 H).

Beispiel 9: Spaltung von silyliertem 1-Butanol

Die Hydrolysekinetiken wurden analog R. F. Cunico, L. Bedell, J. Org. Chem. 1980, 45, 4797-4798 mit 0,1 % ethanolischer HCl aufgenommen. Die Proben wurden nach den angegebenen Zeitabständen per GC (Gaschromatographie) analysiert. Die prozentuale Abnahme des Silylethers wurde durch Flächenvergleich bestimmt. Verwendete Abkürzungen:

M3: 1-Butoxy-trimethylsilylether
IPM2: 1-Butoxy-dimethyl-isopropylsilylether
M2N: 1-Butoxy-dimethyl-norbornylsilylether
TBM2: 1-Butoxy-tert.-butyldimethylsilylether.

Tabelle 2:

| T [min] | M3 | IPM2 | M2N | TBM2 |
|---|---|---|---|---|
| 0 | 97 | | | |
| 2 | 3 | | | |
| 33 | 2 | | | |
| | | | | |
| 0 | | 92 | | |
| 2 | | 73 | | |
| 9 | | 37 | | |
| 16 | | 18 | | |
| 23 | | 11 | | |
| 32 | | 9 | | |
| | | | | |
| 0 | | | 96 | |
| 2 | | | 92 | |
| 24 | | | 76 | |
| 53 | | | 63 | |
| 76 | | | 56 | |
| 176 | | | 37 | |
| 471 | | | 21 | |
| 534 | | | 19 | |
| | | | | |
| 0 | | | | 96 |
| 2 | | | | 85 |
| 42 | | | | 79 |
| 241 | | | | 54 |
| 557 | | | | 28 |

Beispiel 10: Stabilitätstest

Zur Testung der Stabilität gegen Reagenzien wurden jeweils zwei Proben von 2-Butoxy-dimethyl-norbornylsilylether in einem geeigneten Lösungsmittel gelöst und eine Probe mit dem in Tabelle 3 angegebenen Reagenz versetzt. Nach einer geeigneten Zeit wurden dann die Probe und die Blindprobe identisch aufgearbeitet und per GC

(Gaschromatographie) untersucht. Aus dem Flächenvergleich wurde die Stabilität ermittelt. Die Ergebnisse sind in Tabelle 3 zusammengefasst. Dabei bedeutet stabil Flächenprozent > 90% und instabil Flächenprozent < 10%. Alle Tests wurden, wo nichts anderes angegeben wurde, bei Raumtemperatur durchgeführt.

Tabelle 3:

| Reagenz | T | Silylether |
|---|---|---|
| BuMgCl in THF | nach 18 h | stabil |
| 0,05 N NaOH in MeOH | nach 12 min | stabil |
| 0,05 N NaOH in MeOH | nach 1 h | stabil |
| KF in MeOH | nach 1 h | stabil |
| KF in MeOH | nach 7 h bei 65°C | instabil |
| $nBu_4NF$ in THF | nach 5 min | instabil |
| $LiAlH_4$ in THF | nach 1 h | stabil |
| $LiAlH_4$ in THF | nach 16 h | stabil |
| nBuLi in Hexan + THF | nach 1 h | stabil |
| nBuLi in Hexan + THF | nach 16 h | stabil |

Aus der Tabelle 3 ist klar ersichtlich, dass die Schutzgruppe stabil gegen eine Vielzahl metallorganischer Reagenzien ist, aber durch Fluoridionen oder Säure leicht abgespalten werden kann.

## Patentansprüche

**1.** Verwendung von Silanen (1) der allgemeinen Formel

$$R^1_a R_{4-a-x} SiA_x \qquad (I)$$

wobei R gleich oder verschiedenen ist und einen einwertigen, von aliphatischen Kohlenstoff-Kohlenstoff-Mehrfachbindungen freien, gegebenenfalls substituierten Kohlenwasserstoffrest mit 1 bis 18 Kohlenstoffatom(en) je Rest bedeutet,

$R^1$ einen gegebenenfalls substituierten 2-Norbornylrest bedeutet,
A ein Chloratom oder ein Rest der Formel $-OSO_2CF_3$ ist,
a 1, 2 oder 3 und
x 1 oder 2 ist,
mit der Maßgabe, dass die Summe $a+x \leq 4$ ist

zum Schützen von funktionellen Gruppen organischer Verbindungen, wobei die organischen Verbindungen (2) mindestens eine funktionelle Gruppe mit acidem Wasserstoff ausgewählt aus der Gruppe der

Hydroxylgruppen -OH,
Thiolgruppen -SH,
Amingruppen -NH- und $-NH_2$
Carboxylgruppen -COOH und
Amidgruppen -CONH- und $-CONH_2$
und mindestens 2 Kohlenstoffatome enthalten.

**2.** Verwendung nach Anspruch 1, **dadurch gekennzeichnet, dass** die funktionellen Gruppen mit acidem Wasserstoff

Hydroxylgruppen -OH,
Carboxylgruppen -COOH oder
Amidgruppen -CONH- sind.

**3.** Verwendung nach Anspruch 1 oder 2, **dadurch gekennzeichnet, dass** die funktionellen Gruppen mit acidem Wasserstoff Hydroxylgruppen -OH von primären, sekundären oder tertiären Alkoholen oder von 1,2-Diolen, 1,3-Diolen oder 1,4-Diolen sind.

**4.** Verwendung nach Anspruch 1, 2 oder 3, **dadurch gekennzeichnet, dass** als Silan (1) 2-Norbornyldimethylchlorsilan verwendet wird.

**5.** Di(2-Norbornyl)methylchlorsilan

**6.** Tri(2-Norbornyl)chlorsilan

**7.** Di(2-Norbornyl)dichlorsilan

**8.** Di(2-Norbornyl)silyldi(trifluormethansulfonat)

**9.** 2-Norbornyldimethylsilyltrifluormethansulfonat

## Claims

**1.** Use of silanes (1) of the general formula

$$R^1_a R_{4-a-x} SiL_x \qquad (I)$$

where each R is identical or different and is a monovalent, optionally substituted hydrocarbon radical which is free of aliphatic carbon-carbon multiple bonds and has from 1 to 18 carbon atoms per radical,

$R^1$ is an optionally substituted 2-norbornyl radical,
L is a chlorine atom or a radical of the formula $-OSO_2CF_3$,
a is 1, 2 or 3 and
x is 1 or 2,
with the proviso that the sum of a+x≤4

for protecting functional groups of organic compounds (2) which have at least one functional group having acidic hydrogen selected from the group of

hydroxyl groups -OH,
thiol groups -SH,
amine groups -NH- and $-NH_2$
carboxyl groups -COOH and
amide groups -CONH- and $-CONH_2$,

and contain at least 2 carbon atoms.

**2.** Use according to Claim 1, **characterized in that** the functional groups having acidic hydrogen are

hydroxyl groups -OH,
carboxyl groups -COOH or
amide groups -CONH-.

**3.** Use according to Claim 1 or 2, **characterized in that** the functional groups having acidic hydrogen are hydroxyl groups -OH of primary, secondary or tertiary alcohols or of 1,2-diols, 1,3-diols or 1,4-diols.

**4.** Use according to Claim 1, 2 or 3, **characterized in that** the silane (1) used is 2-norbornyldimethylchlorosilane.

**5.** Di(2-norbornyl)methylchlorosilane

**6.** Tri(2-norbornyl)chlorosilane

**7.** Di(2-norbornyl)dichlorosilane

**8.** Di(2-norbornyl)silyl di(trifluoromethanesulphonate)

**9.** 2-Norbornyldimethylsilyl trifluoromethanesulphonate

## Revendications

**1.** Utilisation de silanes (1) de formule générale

$$R^1_a R_{4-a-x} SiA_x \qquad (I)$$

dans laquelle

R est identique ou différent et signifie un radical hydrocarboné monovalent, exempt de liaisons aliphatiques carbone-carbone multiples, le cas échéant substitué, comprenant 1 à 18 atomes de carbone par radical,
$R^1$ signifie un radical 2-norbornyle le cas échéant substitué,
A représente un atome de chlore ou un radical de formule $-OSO_2CF_3$,
a représente 1, 2 ou 3 et
x représente 1 ou 2,

à condition que la somme soit $a+x \leq 4$, pour la protection de groupements fonctionnels de composés organiques, les composés organiques (2) contenant au moins un groupement fonctionnel avec un hydrogène acide, choisi dans le groupe constitué des groupements hydroxyle -OH, thiol -SH, amine -NH- et $-NH_2$, carboxyle -COOH et amide -CONH- et $CONH_2$ et au moins deux atomes de carbone.

**2.** Utilisation selon la revendication 1, **caractérisée en ce que** les groupements fonctionnels avec un hydrogène acide sont des groupements hydroxyle -OH, carboxyle -COOH ou amide -CONH-.

**3.** Utilisation selon la revendication 1 ou 2, **caractérisée en ce que** les groupements fonctionnels avec un hydrogène acide sont des groupements hydroxyle -OH d'alcools primaires, secondaires ou tertiaires ou de 1,2-diols, 1,3-diols ou 1,4-diols.

**4.** Utilisation selon la revendication 1, 2 ou 3, **caractérisée en ce qu'**on utilise du 2-norbornyldiméthylchlorosilane comme silane (1).

**5.** Di(2-norbornyl)méthylchlorosilane.

**6.** Tri(2-norbornyl)chlorosilane.

**7.** Di(2-norbornyl)dichlorosilane.

**8.** Di(2-norbornyl)silyldi(trifluorométhanesulfonate).

**9.** 2-norbornyldiméthylsilyltrifluorométhanesulfonate.